# EUROPÄISCHE PATENTSCHRIFT

(11) **EP 4 558 012 B1**
(45) Veröffentlichungstag und Bekanntmachung des Hinweises auf die Patenterteilung: **24.12.2025**
(21) Anmeldenummer: 23742188.8
(22) Anmeldetag: 06.07.2023
(51) Int. Cl.: A47B 88/95, A47B 88/956

(54) **VERFAHREN ZUR VERBINDUNG EINER FRONTBLENDE MIT EINER SCHUBLADENSEITENWAND**
METHOD OF CONNECTING A DRAWER FRONT WITH A DRAWER SIDEWALL
METHODE DE CONNECTION D'UNE FACADE ET D'UN COTE DE TIROIR

(30) Priorität: 21.07.2022 AT 505502022
(43) Veröffentlichungstag der Anmeldung: 28.05.2025
(73) Patentinhaber: JULIUS BLUM GMBH, 6973 Höchst (AT)
(72) Erfinder: SPERGER, Gerald, 6971 Hard (AT); GMEINER, Claudio, 6861 Alberschwende (AT); VON DER WELLEN, Benjamin, 6700 Bludenz (AT); RAFFEINER, Michael, 6971 Hard (AT)
(74) Vertreter: Torggler & Hofmann Patentanwälte - Innsbruck
(86) Internationale Anmeldenummer: PCT/AT2023/060218
(87) Internationale Veröffentlichungsnummer: WO 2024/016031

(56) Entgegenhaltungen:
- HETTICH GROUP: "Installing AvanTech YOU front panels: with BlueJig 105 drilling jig", 5 May 2020 (2020-05-05), XP093085073, Retrieved from the Internet <URL:https://www.youtube.com/watch?v=B9vNRHRj2a4> [retrieved on 20230922]
- HETTICH GROUP: "BlueJig marking jig: Assembly of ArciTech drawer front panels", 14 August 2014 (2014-08-14), XP093085021, Retrieved from the Internet <URL:https://www.youtube.com/watch?v=qbi-x7y6W1Y> [retrieved on 20230922]

## Beschreibung

Die Erfindung betrifft ein Verfahren zur Montage wenigstens einer Frontblende an wenigstens einer Schubladenseitenwand gemäß dem Oberbegriff des Anspruchs 1.

Bei der Montage einer Frontblende an einer Schubladenseitenwand ist es wichtig, dass die Frontblende exakt relativ zur Schubladenseitenwand ausgerichtet ist, um ein gleichmäßiges Fugenbild zu erzielen. Eine Herausforderung besteht dabei darin, Bohrungen für Verbindungselemente in der Frontblende an den richtigen Positionen zu platzieren, wobei die Positionen in der Regel manuell ausgemessen werden, was zeitaufwändig ist und mit Messungenauigkeiten verbunden sein kann.

Die DE 202011106765 U1 offenbart einen Frontwandbeschlag mit einem daran befestigten Frontwandhalter, wobei in den Frontwandhalter Befestigungsschrauben eingesetzt sind.

Die EP 0439748 A2 offenbart eine Lösung, bei welcher erst der Frontwandbeschlag mit der Frontwand verbunden werden muss und anschließend dann der Frontwandbeschlag mit dem Frontwandhalter verbunden wird. Ohne die Frontwand würde der Frontwandbeschlag nicht positionsfest vom Frontwandhalter gehalten werden können. IM

Die folgende YouTube Videos https://www.youtube.com/watch?v=B9vNRHRj2a4 und https://www.youtube.com/watch?v=qbi-x7y6W1Y zeigen eine Lösung, bei der die Frontblende mithilfe einer Bohrlehre markiert wird, die in der Seitenwand der Schublade fixiert ist. Anschließend wird die Bohrlehre entfernt, und die Frontblende sowie die Schubladenseitenwand werden mithilfe einer separaten Haltevorrichtung miteinander verbunden.

Die Aufgabe der vorliegenden Erfindung besteht darin, ein gegenüber dem Stand der Technik verbessertes Verfahren zur Montage wenigstens einer Frontblende an wenigstens einer Schubladenseitenwand anzugeben, wobei die aus dem Stand der Technik bekannten Nachteile zumindest teilweise behoben sind.

Diese Aufgabe wird gelöst durch die Merkmale des Anspruchs 1.

Soll eine Frontblende an der Schubladenseitenwand montiert werden, so muss ein Monteur die Frontblende nur noch relativ zur Schubladenseitenwand ausrichten, wobei die wenigstens eine Position für ein Bohrloch in der Frontblende automatisch mittels der wenigstens eine Markierungsvorrichtung markiert wird. Ein zeitaufwändiges und potenziell ungenaues Ausmessen der Position ist nicht mehr notwendig. Das Bohrloch kann in einem anschließenden Schritt an der markierten Position in die Frontblende eingebracht werden.

Dementsprechend ist das erfindungsgemäße Verfahren zur Montage wenigstens einer Frontblende an wenigstens einer Schubladenseitenwand, welche wenigstens eine Markierungsvorrichtung zur Markierung wenigstens einer Position für ein Bohrloch in der Frontblende aufweist, wobei die Markierungsvorrichtung die Stirnseite der Schubladenseitenwand überragt, durch die folgenden Verfahrensschritte gekennzeichnet: es wird wenigstens eine Position für ein Bohrloch an der Frontblende mittels der wenigstens einen Markierungsvorrichtung der Schubladenseitenwand markiert, vorzugsweise wobei wenigstens ein Marker der Markierungsvorrichtung an der zu markierenden Position in Kontakt mit der Frontblende tritt, und es wird wenigstens ein Bohrloch in die Frontblende an der wenigstens einen markierten Position eingebracht.

Gemäß einer bevorzugten Ausführungsform weist die Markierungsvorrichtung wenigstens einen die Stirnseite der Schubladenseitenwand überragenden Marker auf, wobei der Marker wenigstens eine, vorzugsweise im Wesentlichen kegelförmige, Spitze aufweist, welche an der zu markierenden Position in ein Material der zu verbindenden Frontblende eindringt.

Alternativ oder ergänzend kann es vorgesehen sein, dass die Markierungsvorrichtung wenigstens zwei die Stirnseite der Schubladenseitenwand überragende Marker aufweist, vorzugsweise wobei die Marker in einer Richtung quer zu einer Längsrichtung der Schubladenseitenwand voneinander beabstandet sind. Auf diese Weise können gleichzeitig wenigstens zwei Positionen für ein Bohrloch in der Frontblende markiert werden.

Erfindungsgemäß ist die Markierungsvorrichtung als Frontblendehaltevorrichtung ausgebildet, um die Frontblende über die wenigstens eine Verbindungsvorrichtung mit der Schubladenseitenwand zu verbinden, vorzugsweise ist die Markierungsvorrichtung auch als Schubladenbodenabstützvorrichtung ausgebildet, um einen Schubladenboden, vorzugsweise mittig, an der zu verbindenden Frontblende abzustützen, und/oder die Markierungsvorrichtung an der zu verbindenden Frontblende montierbar ist, vorzugsweise durch Schrauben und/oder Stecken.

Entsprechend kann es gemäß vorteilhaften Ausführungsformen des Verfahrens vorgesehen sein, dass die wenigstens eine Markierungsvorrichtung in einem weiteren Verfahrensschritt von der wenigstens einen Schubladenseitenwand gelöst wird, und/oder wenigstens eine Frontblendehaltevorrichtung, vorzugsweise die wenigstens eine Markierungsvorrichtung, in einem weiteren Verfahrensschritt über wenigstens ein Befestigungselement, vorzugsweise in Form einer Schraube, über das wenigstens eine Bohrloch an der Frontblende montiert wird, vorzugsweise wobei die Frontblende anschließend durch Verbinden der Frontblendehaltevorrichtung mit der wenigstens einen Verbindungsvorrichtung mit der wenigstens einen Schubladenseitenwand verbunden wird, und/oder wenigstens eine Schubladenbodenabstützvorrichtung, vorzugsweise die wenigstens eine Markierungsvorrichtung, in einem weiteren Verfahrensschritt mit der Frontblende, vorzugsweise mittig, verbunden und wenigstens ein Schubladenboden an der Schubladenbodenabstützvorrichtung abgestützt wird.

Weitere bevorzugte Ausführungsformen des Verfahrens sind in den weiteren abhängigen Ansprüchen definiert.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: eine Schublade mit einer zu montierenden Frontblende in einer perspektivischen Ansicht,
- Fig. 2 - 4: ein vergrößerter Ausschnitt der Fig. 1 zur Illustration der Montage der Frontblende,
- Fig. 5: eine Anordnung aus einer Schubladenseitenwand und einer Schubladenausziehführung in einer perspektivischen Ansicht,
- Fig. 6 - 8: ein erstes Ausführungsbeispiel einer Verbindungsvorrichtung zum Verbinden einer Frontblende mit der Schubladenseitenwand, wobei Fig. 6 eine perspektivische Ansicht, Fig. 8 eine Explosionsansicht und Fig. 7 die Einstellung eines Verbindungselements relativ zur Verbindungsvorrichtung zeigt,
- Fig. 9 - 11: eine Figurenabfolge zur Illustration der Verbindung des Verbindungselements mit der Verbindungsvorrichtung gemäß dem ersten Ausführungsbeispiel, jeweils in einer Querschnittsansicht,
- Fig. 12, 13: ein zweites Ausführungsbeispiel einer Verbindungsvorrichtung zum Verbinden einer Frontblende mit der Schubladenseitenwand, wobei Fig. 12 eine perspektivische Ansicht und Fig. 13 eine Explosionsansicht zeigt,
- Fig. 14 - 17: eine Figurenabfolge zur Illustration der Verbindung eines Verbindungselements mit der Verbindungsvorrichtung gemäß dem zweiten Ausführungsbeispiel, jeweils in einer Querschnittsansicht,
- Fig. 18, 19: die Verbindungsvorrichtung gemäß dem zweiten Ausführungsbeispiel mit einer eingesetzten Markierungsvorrichtung in Form einer Klammer in einer Querschnittsansicht, wobei die Markierungsvorrichtung in Fig. 19 isoliert dargestellt ist, und
- Fig. 20: eine Schublade in einer perspektivischen Ansicht von unten, wobei die Markierungsvorrichtung der Fig. 18 und 19 den Schubladenboden abstützt.

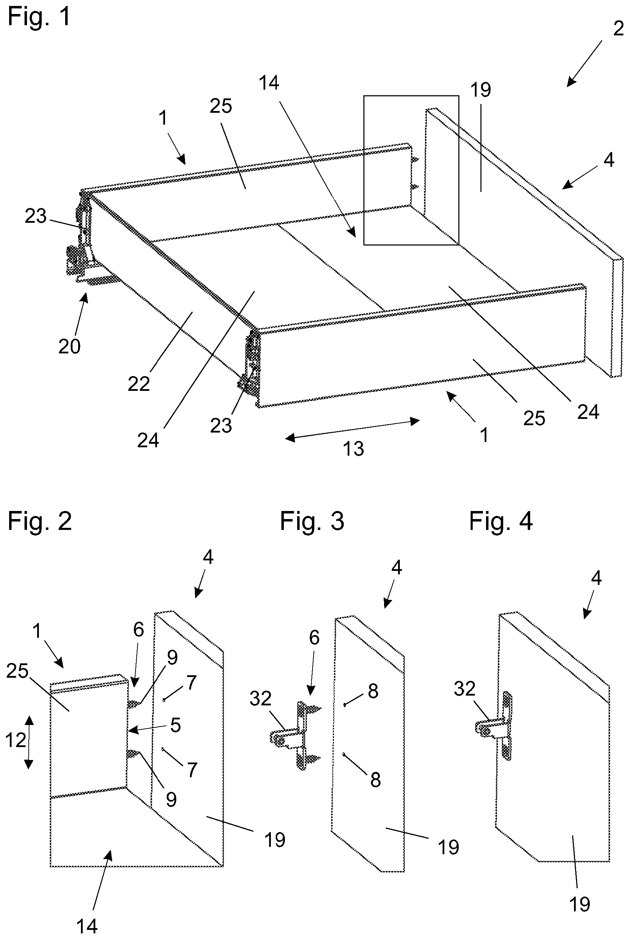

Die Fig. 1 zeigt eine Schublade 2 mit einer zu montierenden Frontblende 4 in einer perspektivischen Ansicht. Die Fig. 2 bis 4 zeigen den in der Fig. 1 markierten Ausschnitt zur Illustration der Montage der Frontblende 4.

Die Schublade 2 umfasst eine Schubladenseitenwand 1 mit wenigstens eine Verbindungsvorrichtung 3 zum, vorzugsweise lösbaren, Verbinden einer Frontblende 4 mit der Schubladenseitenwand 1, wobei die Schubladenseitenwand 1 eine der zu verbindenden Frontblende 4 zugewandte Stirnseite 5 aufweist. Die Schubladenseitenwand 1 weist wenigstens eine Markierungsvorrichtung 6 zur Markierung wenigstens einer Position 7 für ein Bohrloch 8 in der Frontblende 4 auf, wobei die Markierungsvorrichtung 6 die Stirnseite 5 der Schubladenseitenwand 1 überragt.

Die Schubladenseitenwand 1 kann wenigstens ein Hohlprofil 25 umfassen, in welchem die Verbindungsvorrichtung 3 zumindest bereichsweise angeordnet ist.

Die Schublade 2 umfasst einen mit der Schubladenseitenwand 1 und/oder der Frontblende 4 verbindbaren Schubladenboden 14. Der Schubladenboden 14 kann in Segmente 24, z.B. zwei Segmente 24, unterteilt sein.

Die Markierungsvorrichtung 6 weist wenigstens einen die Stirnseite 5 der Schubladenseitenwand 1 überragenden Marker 9 auf. Der Marker 9 weist wenigstens eine in ein Material der zu verbindenden Frontblende 4 eindringbare, vorzugsweise im Wesentlichen kegelförmige, Spitze auf und ist Teil eines Befestigungselements, vorzugsweise in Form einer Schraube, eines Nagels oder einer Klammer. Im dargestellten Fall ist der Marker 9 Teil eines Befestigungselements in Form einer Schraube.

Die Markierungsvorrichtung 6 kann wie im dargestellten Fall zwei die Stirnseite 5 der Schubladenseitenwand 1 überragende Marker 9 aufweisen, wobei die Marker 9 in einer Richtung 12 quer zu einer Längsrichtung 13 der Schubladenseitenwand 1 voneinander beabstandet sind.

Die Markierungsvorrichtung 6 ist an der zu verbindenden Frontblende 4 montierbar, im konkret dargestellten Fall durch Schrauben.

Die Markierungsvorrichtung 6 ist als Frontblendehaltevorrichtung ausgebildet, um die Frontblende 4 über die wenigstens eine Verbindungsvorrichtung 3 mit der Schubladenseitenwand 1 zu verbinden.

Die Markierungsvorrichtung 6 kann wenigstens ein Verbindungselement 32 umfassen, welches in einem Querschnitt z.B. U-förmig ausgebildet ist. Am Verbindungselement 32 können die Schrauben oder die Marker 9 gelagert sein.

In einem über die wenigstens eine Verbindungsvorrichtung 3 verbundenen Zustand kontaktiert die Stirnseite 5 der Schubladenseitenwand 1 eine der Schubladenseitenwand 1 zugewandte Innenseite 19 der Frontblende 4 zumindest abschnittsweise.

Um die Frontblende 4 an der wenigstens einen Schubladenseitenwand 1 zu montieren, ist es gemäß einem bevorzugten Ausführungsbeispiel der Erfindung vorgesehen , dass wenigstens eine Position 7 für ein Bohrloch 8 an der Frontblende 4 mittels der wenigstens einen Markierungsvorrichtung 6 der Schubladenseitenwand 1 markiert wird, wobei der wenigstens eine Marker 9 der Markierungsvorrichtung 6 an der zu markierenden Position 7 in Kontakt mit der Frontblende 4 tritt (vgl. Fig. 2). In einem weiteren Verfahrensschritt wird wenigstens ein Bohrloch 8 in die Frontblende 4 an der wenigstens einen markierten Position 7 eingebracht (Fig. 3).

Die wenigstens eine Markierungsvorrichtung 6 wird in einem weiteren Verfahrensschritt von der wenigstens einen Schubladenseitenwand 1 gelöst (vgl. Fig. 3).

Die die wenigstens eine Markierungsvorrichtung 6, welche gleichzeitig als Frontblendehaltevorrichtung ausgebildet ist, wird in einem weiteren Verfahrensschritt über wenigstens ein Befestigungselement, vorzugsweise in Form einer Schraube, über das wenigstens eine Bohrloch 8 an der Frontblende 4 montiert (vgl. Fig. 4), wobei die Frontblende 4 anschließend durch Verbinden der Frontblendehaltevorrichtung mit der wenigstens einen Verbindungsvorrichtung 3 mit der wenigstens einen Schubladenseitenwand 1 verbunden wird.

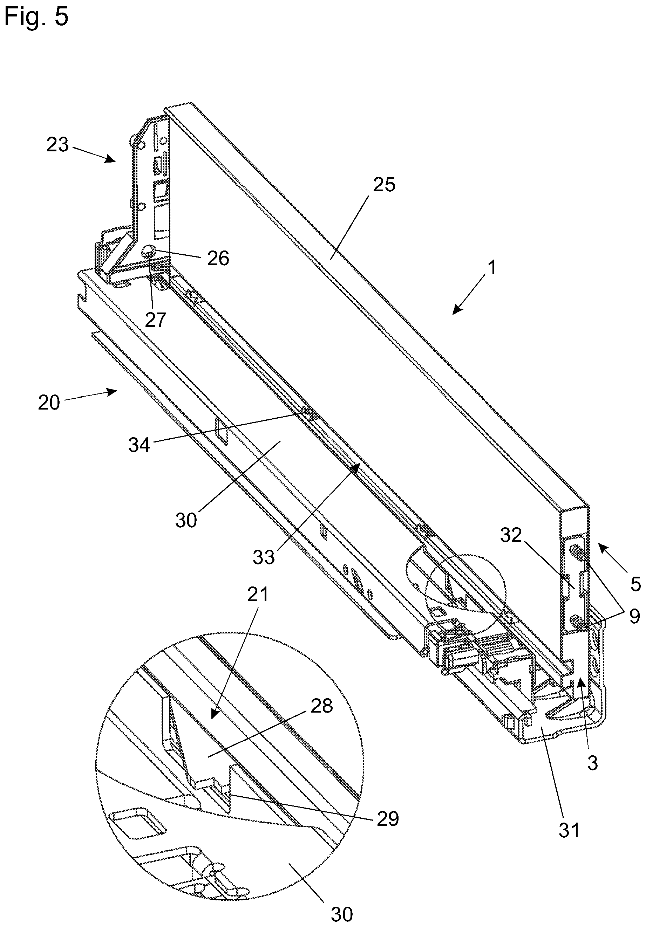

Die Fig. 5 zeigt eine Anordnung aus einer Schubladenseitenwand 1 und einer Schubladenausziehführung 20 in einer perspektivischen Ansicht.

Die Schubladenausziehführung 20 weist eine mit einem Möbelkorpus zu verbindende Korpusschiene 31 und eine relativ dazu bewegbar gelagerte Ladenschiene 30 auf.

Es ist wenigstens eine Koppelvorrichtung 21 vorgesehen, mit welcher die Schubladenseitenwand 1, vorzugsweise lösbar, mit der Schubladenausziehführung 20 koppelbar ist. Die Ladenschiene 30 ist zur besseren Sichtbarkeit im Bereich der Koppelvorrichtung 21 aufgebrochen dargestellt. Die Koppelvorrichtung 21 kann einen Koppelhebel 28 und eine damit zusammenwirkende Koppelkontur 29 aufweisen, wobei der Koppelhebel 28 z.B. an der Schubladenseitenwand 1 und die Koppelkontur 29 an der Ladenschiene 30, oder umgekehrt, ausgebildet sein kann.

Die Anordnung kann eine parallel zur Frontblende anordenbare Rückwand 22 umfassen, wobei die Schubladenseitenwand 1 wenigstens einen Rückwandhalter 23 umfasst, über welchen die Rückwand 22 mit der Schubladenseitenwand 1, vorzugsweise lösbar, verbindbar ist. Der Rückwandhalter 23 kann zumindest bereichsweise in der Schubladenseitenwand 1 angeordnet sein.

Die Schubladenseitenwand 1 kann über den Rückwandhalter 23 mit der Schubladenausziehführung 20 verbunden sein. Hierzu kann es vorgesehen sein, dass ein an der Ladenschiene 30, vorzugsweise verstellbar, angeordneter Haken 27 in eine Öffnung 26 im Rückwandhalter 23 eingreift.

In der Schubladenseitenwand 1 kann eine Nut 33 angeordnet sein, in welcher ein Rand eines Schubladenbodens 14 lagerbar ist. Es können Mittel, z.B. Widerhaken 34, zur, vorzugsweise werkzeuglosen, Befestigung des Schubladenbodens 14 an der Schubladenseitenwand 1 oder der Nut 33 angeordnet sein.

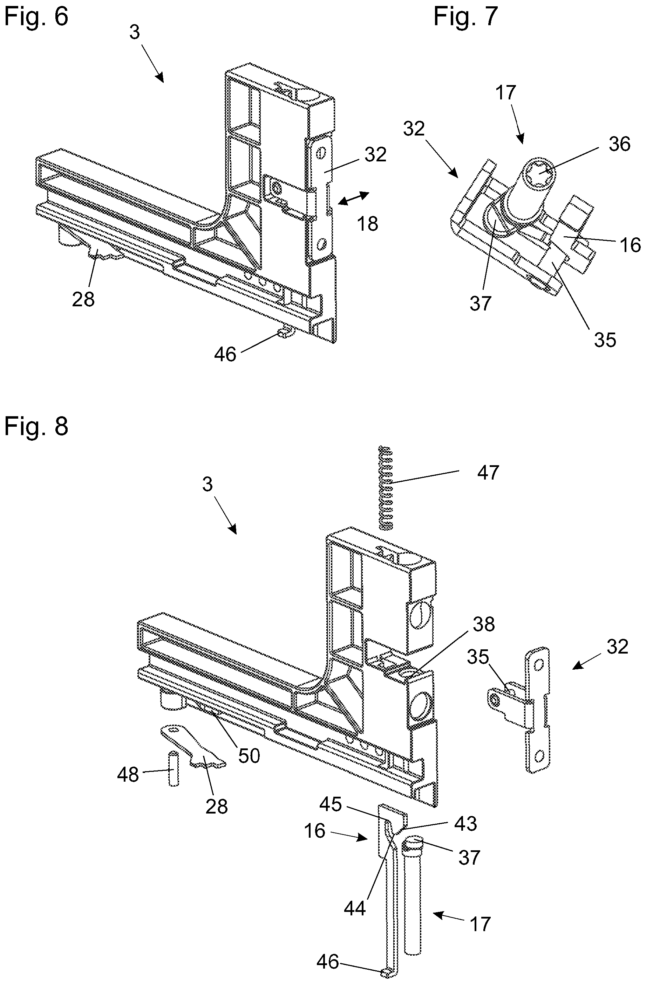

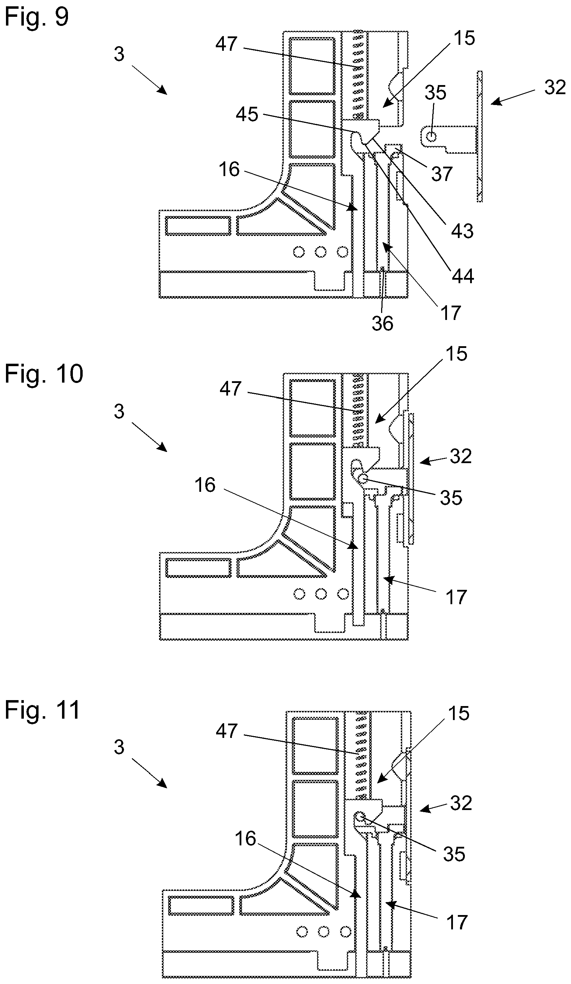

Die Fig. 6 bis 8 zeigen ein erstes Ausführungsbeispiel einer Verbindungsvorrichtung 3 zum Verbinden einer Frontblende 4 mit der Schubladenseitenwand 1, wobei die Fig. 6 eine perspektivische Ansicht, die Fig. 8 eine Explosionsansicht und die Fig. 7 die Einstellung des Verbindungselements 32 relativ zur Verbindungsvorrichtung 3 zeigt. Die Fig. 9 bis 11 zeigen eine Figurenabfolge zur Illustration der Verbindung des Verbindungselements 32 mit der Verbindungsvorrichtung 3.

Die Verbindungsvorrichtung 3 weist wenigstens eine Befestigungsvorrichtung 15 auf, über welche die Markierungsvorrichtung 6 oder das Verbindungselement 32, vorzugsweise lösbar, an und/oder in der Verbindungsvorrichtung 3 befestigt ist.

Hierzu kann die Befestigungsvorrichtung 15 wie im dargestellten Fall wenigstens einen federbelasteten und verschiebbar gelagerten Befestigungsriegel 16 aufweisen. Es ist eine Feder 47 vorgesehen, welche dem Befestigungsriegel 16 in Richtung einer Befestigungsstellung mit einer Kraft beaufschlagt.

Zur Verbindung des Verbindungselements 32 mit dem Befestigungsriegel 16 tritt ein Bolzen 35 des Verbindungselements 32 in Kontakt mit einer Schrägfläche 43 des Befestigungsriegels 16, wobei der Befestigungsriegels 16 entgegen der Kraft der Feder 47 aus der Befestigungsstellung in eine Lösestellung gedrängt wird (vgl. Fig. 10). Der Bolzen 35 überwindet eine Nase 44 und gelangt unter dem Einfluss der Federkraft in eine Mulde 45 (vgl. Fig. 11). Der Befestigungsriegel 16 wird in die Befestigungsstellung zurückbewegt.

Zur Entriegelung weist der Befestigungsriegel 16 an einer Unterseite einen Aktuator 46 auf.

Es ist wenigstens eine Einstellvorrichtung 17 vorgesehen, mit welcher die Markierungsvorrichtung 6 zumindest in eine Richtung 18 quer zu einer Längsrichtung 13 der Schubladenseitenwand 1 relativ zur Schubladenseitenwand 1 einstellbar ist.

Die Einstellvorrichtung 17 kann wie im dargestellten Fall eine zylinderförmige Stange aufweisen, welche an einem ersten Ende ein Betätigungselement 36 und an einem zweiten dem ersten Ende gegenüberliegenden Ende einen Exzenter 37 umfasst. Die Stange kann in einer korrespondierenden Ausnehmung 38 eines Grundkörpers der Verbindungsvorrichtung 3 gelagert sein. Bei einer Betätigung der Einstellvorrichtung 17 verschiebt der Exzenter 37, welcher in Eingriff mit dem Verbindungselement 32 steht oder bringbar ist, das Verbindungselement 32 eine Richtung 18 quer zu einer Längsrichtung 13 der Schubladenseitenwand 1 relativ zur Schubladenseitenwand 1.

Der Koppelhebel 28 ist um eine Drehachse 48 drehbar an der Verbindungsvorrichtung 3 gelagert. Es ist ein Federelement 50 vorgesehen, welches den Koppelhebel 28 in Richtung einer Koppelstellung mit einer Kraft beaufschlagt.

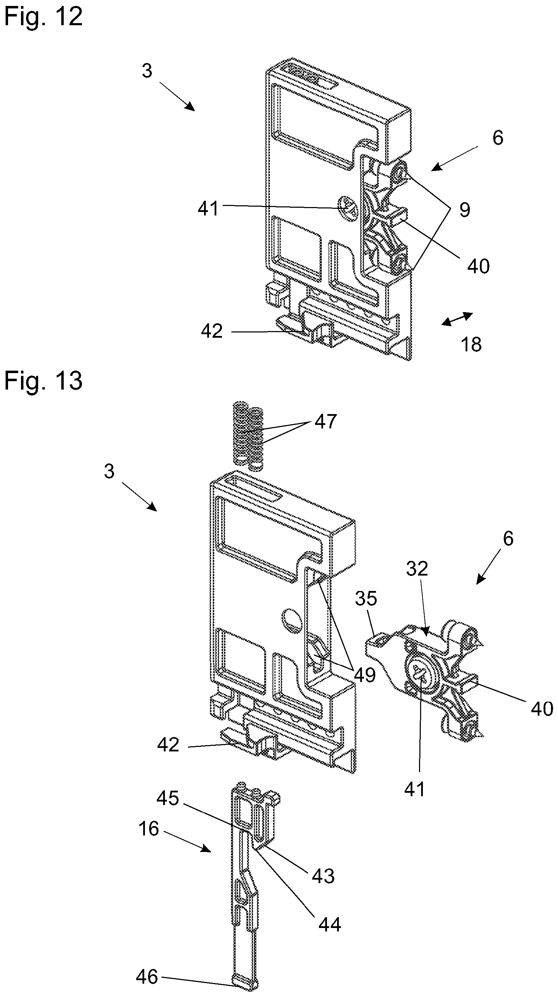

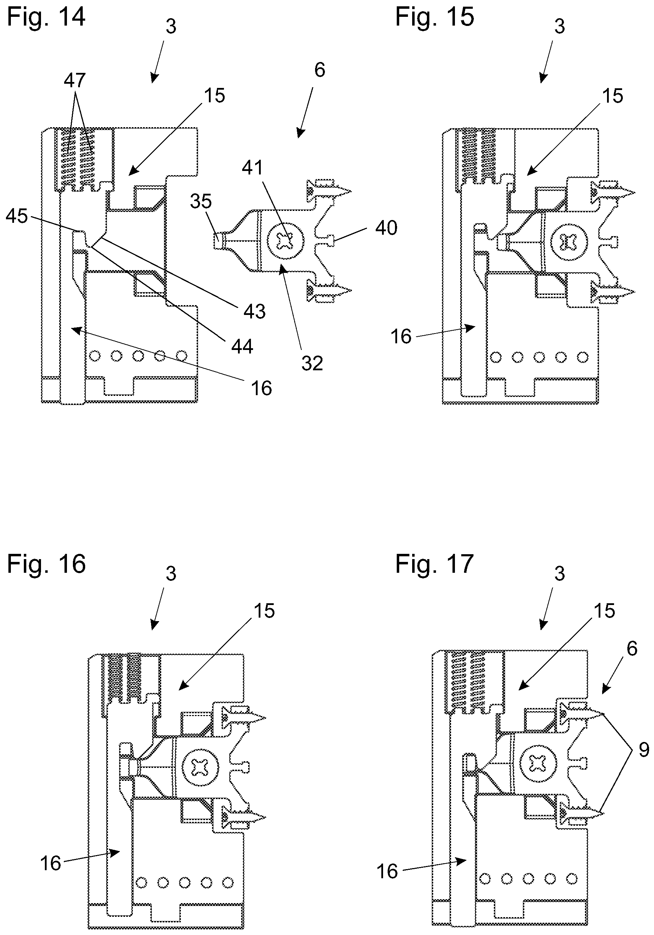

Die Fig. 12 und 13 zeigen ein zweites Ausführungsbeispiel einer Verbindungsvorrichtung 3 zum Verbinden einer Frontblende 4 mit der Schubladenseitenwand 1. Die Fig. 14 bis 17 zeigen eine Figurenabfolge zur Illustration der Verbindung eines Verbindungselements 32 mit der Verbindungsvorrichtung 3.

Das Funktionsprinzip und der grundlegende Aufbau der Verbindungsvorrichtung 3 ist im Wesentlichen derselbe wie bei der Verbindungsvorrichtung 3 gemäß dem ersten Ausführungsbeispiel.

Das Verbindungselement 32 umfasst einen Grundkörper aus Kunststoff. Im Grundkörper sind zwei Schrauben, welche als Marker 9 im Sinne der vorliegenden Erfindung dienen, gelagert. Zwischen den Markern 9 ist ein an die zu verbindende Frontblende 4 anlegbarer Stützfuß 40 angeordnet.

Es ist eine Einstellvorrichtung 17 vorgesehen, mit welcher die Markierungsvorrichtung 6 zumindest in eine Richtung 18 quer zu einer Längsrichtung 13 der Schubladenseitenwand 1 relativ zur Schubladenseitenwand 1 einstellbar ist. Die Einstellvorrichtung 17 umfasst eine Einstellschraube 41, welche im Grundkörper des Verbindungselements 32 drehbar gelagert ist.

Zur Koppelung der Schubladenseitenwand 1 mit einer Schubladenausziehführung 20 weist die Verbindungsvorrichtung 3 wenigstens ein Koppelelement 42 auf, welches zur Koppelung von einem an der Schubladenausziehführung 20 gelagerten Koppelhebel umgriffen werden kann.

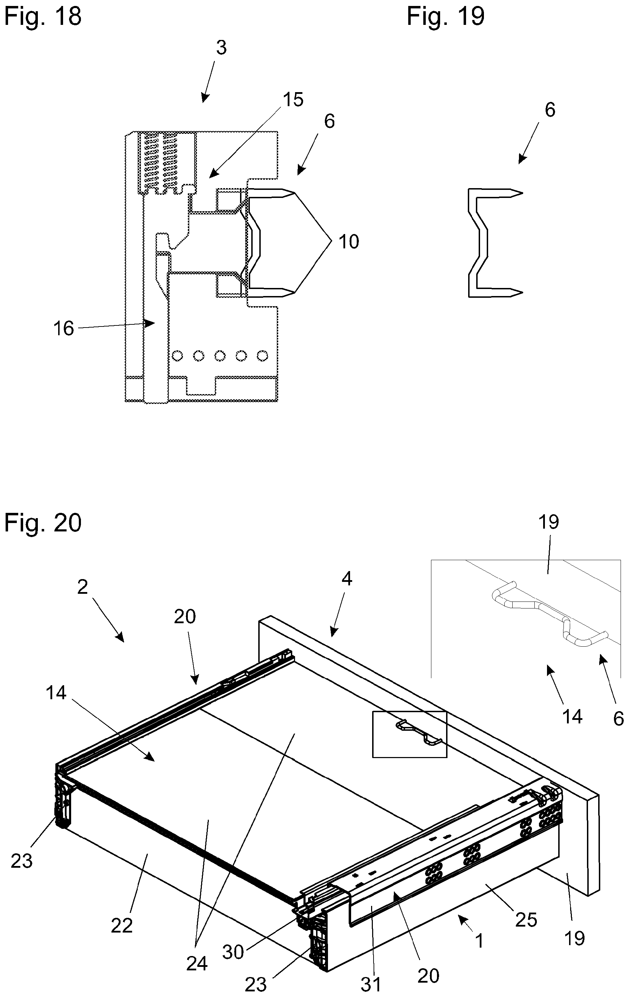

Die Fig. 18 und 19 zeigen die Verbindungsvorrichtung 3 gemäß dem zweiten Ausführungsbeispiel mit einer eingesetzten Markierungsvorrichtung 6 in Form einer Klammer. Die Fig. 20 zeigt eine Schublade 2 in einer perspektivischen Ansicht von unten, wobei die Markierungsvorrichtung 6 in die Frontblende 4 eingesteckt ist und den Schubladenboden 14 mittig abstützt.

Die Markierungsvorrichtung 6 ist als Schubladenbodenabstützvorrichtung ausgebildet, um einen Schubladenboden 14, vorzugsweise mittig, an der zu verbindenden Frontblende 4 abzustützen.

Die Markierungsvorrichtung 6 kann in einer ersten Betriebsstellung zur Markierung wenigstens einer Position 7 für ein Bohrloch 8 in der Frontblende 4 in die Verbindungsvorrichtung 3 eingesetzt sein (vgl. Fig. 18). Hierzu kann die Verbindungsvorrichtung 3 eine Aufnahmekontur 49 aufweisen (vgl. Fig. 13).

Anschließend kann die Markierungsvorrichtung 6 der Verbindungsvorrichtung 3 entnommen werden (vgl. Fig. 19), mit der Frontblende 4, vorzugsweise mittig, verbunden werden, vorzugsweise durch Einstecken der Spitzen 10 in korrespondierende Löcher. Dabei kann die Markierungsvorrichtung 6 wenigstens einen Schubladenboden 14 abstützen.

## Patentansprüche

1. Verfahren zur Montage wenigstens einer Frontblende (4) an wenigstens einer Schubladenseitenwand (1) für eine Schublade (2), wobei die Schubladenseitenwand (1) wenigstens eine Verbindungsvorrichtung (3) zum, vorzugsweise lösbaren, Verbinden einer Frontblende (4) mit der Schubladenseitenwand (1), eine der zu verbindenden Frontblende (4) zugewandte Stirnseite (5) und wenigstens eine Markierungsvorrichtung (6) zur Markierung wenigstens einer Position (7) für ein Bohrloch (8) in der Frontblende (4) aufweist, wobei die Markierungsvorrichtung (6) die Stirnseite (5) der Schubladenseitenwand (1) überragt, die folgenden Verfahrensschritte aufweisend:
- es wird wenigstens eine Position (7) für ein Bohrloch (8) an der Frontblende (4) mittels der wenigstens einen Markierungsvorrichtung (6) der Schubladenseitenwand (1) markiert, vorzugsweise wobei wenigstens ein Marker (9, 10) der Markierungsvorrichtung (6) an der zu markierenden Position (7) in Kontakt mit der Frontblende (4) tritt,
- es wird wenigstens ein Bohrloch (8) in die Frontblende (4) an der wenigstens einen markierten Position (7) eingebracht, und **gekennzeichnet**
**durch** den Verfahrensschritt:
- es wird wenigstens eine Frontblendehaltevorrichtung, in Form der wenigstens einen Markierungsvorrichtung (6) über wenigstens ein Befestigungselement, vorzugsweise in Form einer Schraube, über das wenigstens eine Bohrloch (8) an der Frontblende (4) montiert, wobei die Frontblende (4) anschließend durch Verbinden der Frontblendehaltevorrichtung mit der wenigstens einen Verbindungsvorrichtung (3) mit der wenigstens einen Schubladenseitenwand (1) verbunden wird.

2. Verfahren nach Anspruch 1, wobei die wenigstens eine Markierungsvorrichtung (6) in einem weiteren Verfahrensschritt von der wenigstens einen Schubladenseitenwand (1) gelöst wird.

3. Verfahren nach einem der Ansprüche 1 bis 2, wobei wenigstens eine Schubladenbodenabstützvorrichtung, vorzugsweise die wenigstens eine Markierungsvorrichtung (6), in einem weiteren Verfahrensschritt mit der Frontblende (4), vorzugsweise mittig, verbunden und wenigstens ein Schubladenboden (14) an der Schubladenbodenabstützvorrichtung abgestützt wird.

4. Verfahren nach einem der Ansprüche 1 bis 3, wobei die Markierungsvorrichtung (6) wenigstens einen die Stirnseite (5) der Schubladenseitenwand (1) überragenden Marker (9, 10) aufweist, wobei der Marker (9, 10) wenigstens eine, vorzugsweise im Wesentlichen kegelförmige, Spitze aufweist, welche an der zu markierenden Position (7) in ein Material der zu verbindenden Frontblende (4) eindringt.

5. Verfahren nach einem der Ansprüche 1 bis 4, wobei die Markierungsvorrichtung (6) wenigstens zwei die Stirnseite (5) der Schubladenseitenwand (1) überragende Marker (9, 10) aufweist, vorzugsweise wobei die Marker (9, 10) in einer Richtung (12) quer zu einer Längsrichtung (13) der Schubladenseitenwand (1) voneinander beabstandet sind, wobei gleichzeitig wenigstens zwei Positionen für ein Bohrloch in der Frontblende (4) markiert werden.

6. Verfahren nach einem der Ansprüche 1 bis 5, wobei die Verbindungsvorrichtung (3) wenigstens eine Befestigungsvorrichtung (15) aufweist, über welche die Markierungsvorrichtung (6) in einem weiteren Verfahrensschritt, vorzugsweise lösbar, an und/oder in der Verbindungsvorrichtung (3) befestigt wird.

7. Verfahren nach einem der Ansprüche 1 bis 6, wobei wenigstens eine Einstellvorrichtung (17) vorgesehen ist, mit welcher die Markierungsvorrichtung (6) in einem weiteren Verfahrensschritt zumindest in eine Richtung (18) quer zu einer Längsrichtung (13) der Schubladenseitenwand (1) relativ zur Schubladenseitenwand (1) eingestellt wird.

8. Verfahren nach einem der Ansprüche 1 bis 7, wobei die wenigstens eine Frontblende (4) derart über die wenigstens eine Verbindungsvorrichtung (3) mit der wenigstens einen Schubladenseitenwand (1) verbunden wird, dass die Stirnseite (5) der Schubladenseitenwand (1) eine der Schubladenseitenwand (1) zugewandte Innenseite (19) der Frontblende (4) zumindest abschnittsweise kontaktiert.

9. Verfahren nach Anspruch 8, wobei in einem weiteren Verfahrensschritt wenigstens eine Schubladenausziehführung (20) bereitgestellt wird, vorzugsweise wobei wenigstens eine Koppelvorrichtung (21) vorgesehen ist, mit welcher die Schubladenseitenwand (1), vorzugsweise lösbar, mit der Schubladenausziehführung (20) gekoppelt wird.

10. Verfahren nach Anspruch 8 oder 9, wobei in einem weiteren Verfahrensschritt wenigstens ein Schubladenboden (14) bereitgestellt wird, welcher mit der Schubladenseitenwand (1) und/oder der Frontblende (4) verbunden wird.

11. Verfahren nach einem der Ansprüche 8 bis 10, wobei in einem weiteren Verfahrensschritt wenigstens eine Rückwand (22) bereitgestellt und parallel zur Frontblende (4) angeordnet wird, vorzugsweise wobei die Schubladenseitenwand (1) wenigstens einen Rückwandhalter (23) umfasst, über welchen die Rückwand (22) mit der Schubladenseitenwand (1), vorzugsweise lösbar, verbunden wird.

## Claims

1. A method for mounting at least one front panel (4) on at least one drawer side wall (1) for a drawer (2), wherein the drawer side wall (1) has at least one connecting device (3) for, preferably detachably, connecting a front panel (4) to the drawer side wall (1), an end face (5) facing the front panel (4) to be connected and at least one marking device (6) for marking at least one position (7) for a drill hole (8) in the front panel (4), wherein the marking device (6) projects beyond the end face (5) of the drawer side wall (1), comprising the following method steps:
- at least one position (7) for a drill hole (8) is marked on the front panel (4) by means of the at least one marking device (6) of the drawer side wall (1), preferably wherein at least one marker (9, 10) of the marking device (6) comes into contact with the front panel (4) at the position (7) to be marked,
- at least one drill hole (8) is made in the front panel (4) at the at least one marked position (7), and, **characterized by** the method step:
- at least one front panel holding device, in form of the at least one marking device (6), is mounted on the front panel (4) via at least one fastening element, preferably in the form of a screw, via the at least one drilled hole (8), wherein the front panel (4) is then connected to the at least one drawer side wall (1) by connecting the front panel holding device to the at least one connecting device (3).

2. The method according to claim 1, wherein the at least one marking device (6) is detached from the at least one drawer side wall (1) in a further step.

3. The method according to any one of claims 1 to 2, wherein at least one drawer bottom support device, preferably the at least one marking device (6), is connected to the front panel (4), preferably centrally, in a further step and at least one drawer bottom (14) is supported on the drawer bottom support device.

4. The method according to any one of claims 1 to 3, wherein the marking device (6) has at least one marker (9, 10) projecting beyond the front side (5) of the drawer side wall (1), wherein the marker (9, 10) has at least one, preferably substantially conical, tip which penetrates into a material of the front panel (4) to be connected at the position (7) to be marked.

5. The method according to any one of claims 1 to 4, wherein the marking device (6) has at least two markers (9, 10) projecting beyond the front side (5) of the drawer side wall (1), preferably wherein the markers (9, 10) are spaced apart from one another in a direction (12) transverse to a longitudinal direction (13) of the drawer side wall (1), wherein at least two positions for a drill hole in the front panel (4) are marked simultaneously.

6. The method according to any one of claims 1 to 5, wherein the connecting device (3) has at least one fastening device (15) via which the marking device (6) is fastened in a further step, preferably detachably, to and/or in the connecting device (3).

7. The method according to any one of claims 1 to 6, wherein at least one adjustment device (17) is provided, with which the marking device (6) is adjusted in a further step at least in a direction (18) transverse to a longitudinal direction (13) of the drawer side wall (1) relative to the drawer side wall (1) .

8. The method according to any one of claims 1 to 7, wherein the at least one front panel (4) is connected to the at least one drawer side wall (1) via the at least one connecting device (3) in such a way that the front side (5) of the drawer side wall (1) contacts at least in portions an inner side (19) of the front panel (4) facing the drawer side wall (1).

9. The method according to claim 8, wherein in a further step at least one drawer extraction guide (20) is provided, preferably wherein at least one coupling device (21) is provided with which the drawer side wall (1) is coupled, preferably detachably, to the drawer extraction guide (20).

10. The method according to claim 8 or 9, wherein in a further step at least one drawer bottom (14) is provided, which is connected to the drawer side wall (1) and/or the front panel (4).

11. The method according to any one of claims 8 to 10, wherein in a further step at least one rear wall (22) is provided and arranged parallel to the front panel (4), preferably wherein the drawer side wall (1) comprises at least one rear wall holder (23) via which the rear wall (22) is connected to the drawer side wall (1), preferably detachably.

## Revendications

1. A Procédé de montage d'au moins un panneau avant (4) au niveau d'au moins une paroi latérale de tiroir (1) pour un tiroir (2), dans lequel la paroi latérale de tiroir (1) présente au moins un dispositif de liaison (3) pour relier, de préférence de manière détachable, un panneau avant (4) à la paroi latérale de tiroir (1), une face frontale (5) orientée vers le panneau avant (4) à relier et au moins un dispositif de marquage (6) pour marquer au moins une position (7) pour un trou de perçage (8) dans le panneau avant (4), dans lequel le dispositif de marquage (6) dépasse de la face frontale (5) de la paroi latérale de tiroir (1), présentant les étapes de procédé suivantes:
- au moins une position (7) pour un trou de perçage (8) est marquée au niveau du panneau avant (4) au moyen de l'au moins un dispositif de marquage (6) de la paroi latérale de tiroir (1), de préférence dans lequel au moins un marqueur (9, 10) du dispositif de marquage (6) entre en contact avec le panneau avant (4) dans la position (7) à marquer,
- au moins un trou de perçage (8) est percé dans le panneau avant (4) dans l'au moins une position marquée (7), et **caractérisé par** l'étape de procédé:
- au moins un dispositif de maintien de panneau avant, sous la forme de l'au moins un dispositif de marquage (6) est monté par le biais d'au moins un élément de fixation, de préférence sous la forme d'une vis, au-dessus de l'au moins un trou de perçage (8) au niveau du panneau avant (4), dans lequel le panneau avant (4) est ensuite relié à l'au moins une paroi latérale de tiroir (1) par liaison du dispositif de maintien de panneau avant avec l'au moins un dispositif de liaison (3).

2. Procédé selon la revendication 1, dans lequel l'au moins un dispositif de marquage (6) est détaché de l'au moins une paroi latérale de tiroir (1) dans une autre étape de procédé.

3. Procédé selon l'une quelconque des revendications 1 à 2, dans lequel au moins un dispositif d'appui de fond de tiroir, de préférence l'au moins un dispositif de marquage (6), est relié au panneau avant (4), de préférence au centre, dans une autre étape de procédé et au moins un fond de tiroir (14) est soutenu sur le dispositif d'appui de fond de tiroir.

4. Procédé selon l'une quelconque des revendications 1 à 3, dans lequel le dispositif de marquage (6) présente au moins un marqueur (9, 10) dépassant de la face frontale (5) de la paroi latérale de tiroir (1), dans lequel le marqueur (9, 10) présente au moins une pointe, de préférence sensiblement conique, qui pénètre dans un matériau du panneau avant (4) à relier dans la position à marquer (7).

5. Procédé selon l'une quelconque des revendications 1 à 4, dans lequel le dispositif de marquage (6) présente au moins deux marqueurs (9, 10) dépassant de la face frontale (5) de la paroi latérale de tiroir (1), de préférence dans lequel les marqueurs (9, 10) sont espacés l'un de l'autre dans une direction (12) transversalement à une direction longitudinale (13) de la paroi latérale de tiroir (1), dans lequel au moins deux positions pour un trou de perçage dans le panneau avant (4) sont marquées simultanément.

6. Procédé selon l'une quelconque des revendications 1 à 5, dans lequel le dispositif de liaison (3) présente au moins un dispositif de fixation (15), par l'intermédiaire duquel le dispositif de marquage (6) est fixé à et/ou dans le dispositif de liaison (3) dans une autre étape de procédé, de préférence de manière détachable.

7. Procédé selon l'une quelconque des revendications 1 à 6, dans lequel au moins un dispositif de réglage (17) est prévu, avec lequel le dispositif de marquage (6) est réglé dans une autre étape de procédé au moins dans une direction (18) transversalement à une direction longitudinale (13) de la paroi latérale de tiroir (1) par rapport à la paroi latérale de tiroir (1).

8. Procédé selon l'une quelconque des revendications 1 à 7, dans lequel l'au moins un panneau avant (4) est relié à l'au moins une paroi latérale de tiroir (1) par l'intermédiaire de l'au moins un dispositif de liaison (3) de sorte que la face frontale (5) de la paroi latérale de tiroir (1) entre en contact au moins par sections avec une face intérieure (19) du panneau avant (4) orientée vers la paroi latérale de tiroir (1).

9. Procédé selon la revendication 8, dans lequel au moins un guidage d'extraction de tiroir (20) est mis à disposition dans une autre étape de procédé, de préférence dans lequel au moins un dispositif de couplage (21) est prévu, avec lequel la paroi latérale de tiroir (1) est couplée de préférence de manière détachable au guidage d'extraction de tiroir (20).

10. Procédé selon la revendication 8 ou 9, dans lequel au moins un fond de tiroir (14) est mis à disposition dans une autre étape de procédé, lequel est relié à la paroi latérale de tiroir (1) et/ou au panneau avant (4).

11. Procédé selon l'une quelconque des revendications 8 à 10, dans lequel dans une autre étape de procédé, au moins une paroi arrière (22) est mise à disposition et disposée parallèlement au panneau avant (4), de préférence dans lequel la paroi latérale de tiroir (1) comprend au moins un support de paroi arrière (23), par l'intermédiaire duquel la paroi arrière (22) est reliée à la paroi latérale de tiroir (1), de préférence de manière détachable.
